# EUROPÄISCHE PATENTSCHRIFT

(11) **EP 0 780 674 B1**
(45) Veröffentlichungstag und Bekanntmachung des Hinweises auf die Patenterteilung: **03.11.1999**
(21) Anmeldenummer: 95120452.8
(22) Anmeldetag: 22.12.1995
(51) Int. Cl.: G01L 9/00, G01L 19/00

(54) **Druckmessanordnung mit Schirmelektrode**
Pressure measuring arrangement with shielding electrode
Dispositif de mesure de pression avec électrode de blindage

(43) Veröffentlichungstag der Anmeldung: 25.06.1997
(73) Patentinhaber: ENVEC Mess- und Regeltechnik GmbH + Co., 79576 Weil am Rhein (DE)
(72) Erfinder: Hegner, Frank, Dr., D-79540 Lörrach (DE); Klausmann, Lukas, Dipl.-Ing., D-79539 Lörrach (DE)
(74) Vertreter: Morstadt, Volker, Dipl.-Ing.

(56) Entgegenhaltungen:
- EP-A- 0 658 754
- FR-A- 2 707 002
- US-A- 4 413 527
- PATENT ABSTRACTS OF JAPAN vol. 16, no. 337 (P-1390), 22.Juli 1992 & JP 41 002036 A (OKI ELECTRIC IND CO LTD), 3.April 1992,

## Beschreibung

Die Erfindung betrifft eine Druckmeßanordnung mit einem kapazitiven keramischen Drucksensor.

In einem Prospekt der Firma Endress + Hauser "Pressure Transmitter cerabar PMC 133", Maulburg, Germany, TI 105P/00/e/02.94 ist eine Druckmeßanordnung beschrieben, die umfaßt:
- einen kapazitiven, einen Grundkörper mit mindestens einer darauf aufgebrachten Elektrode und eine zugehörige Membran mit einer darauf aufgebrachten Gegen-Elektrode aufweisenden keramischen Drucksensor,
   -- welche Elektrode und welche Gegen-Elektrode an einer Rückseite des Grundkörpers elektrisch kontaktierbar sind,
      --- auf der eine Wandlerschaltung für druckänderungsbedingte Kapazitätsänderungen zwischen Elektrode und Gegen-Elektrode angeordnet ist,
- ein metallisches Gehäuse mit einer Wand, einem abnehmbaren Deckel, einem Zwischenboden und einer diesem gegenüberliegenden Öffnung,
   -- in die der Drucksensor druckdicht eingesetzt ist,
- eine innerhalb des Gehäuses, zwischen Zwischenboden und Drucksensor angeordnete Strom-Ausgangsschaltung,
   -- die ein Ausgangssignal der Wandlerschaltung in einen kapazitätsänderungs-proportionalen, in zwei zu einem im Zwischenboden angeordneten Klemmenpaar führenden Ausgangsleitungen fließenden Gleichstrom mit einer Stromstärke zwischen 4 mA und 20 mA umwandelt, und
- eine Kabeldurchführung für ein zum Klemmenpaar führendes Kabel.

Gegenüber dieser vorbeschriebenen Druckmeßanordnung ist es eine Aufgabe der Erfindung, die Sicherheit gegen die Einkopplung von Störsignalen, also die sogenannte elektromagnetische Verträglichkeit, weiter zu verbessern und ferner die Einhaltung von Standards, die die Explosionssicherheit gewährleisten, zu erleichtern.

Zur Lösung dieser Aufgabe besteht die Erfindung in einer Druckmeßanordnung, die umfaßt:
- einen kapazitiven, einen Grundkörper mit mindestens einer darauf aufgebrachten Elektrode und eine zugehörige Membran mit einer darauf aufgebrachten Gegen-Elektrode aufweisenden keramischen Drucksensor,
   -- welche Elektrode und welche Gegen-Elektrode an einer Rückseite des Grundkörpers elektrisch kontaktierbar sind,
      --- auf der eine Wandlerschaltung für druckänderungsbedingte Kapazitätsänderungen zwischen Elektrode und Gegen-Elektrode angeordnet ist,
- ein topfförmiges metallisches Gehäuse mit einer Wand, einem Boden und einer diesem gegenüberliegenden Öffnung,
   -- in die der Drucksensor druckdicht eingesetzt ist,
- eine innerhalb des Gehäuses angeordnete Strom-Ausgangsschaltung,
   -- die ein Ausgangssignal der Wandlerschaltung in einen kapazitätsänderungs-proportionalen, in zwei isoliert durch den Boden des Gehäuses führenden Ausgangsleitungen fließenden Gleichstrom umwandelt,
- eine innerhalb des Gehäuses isoliert zur Wand angeordnete Schirm-Elektrode, die
   -- mit einer der beiden Ausgangsleitungen und
   -- mit der Gegen-Elektrode niederohmig gekoppelt ist, und
- eine Vergußmasse, mit der das Innere des Gehäuses vollständig gefüllt ist.

Nach einer bevorzugten Ausgestaltung der Erfindung dient eine metallbeschichtete Kunststoff-Folie als Schirm-Elektrode. Bei einer anderen bevorzugten Ausgestaltung erzeugt die Strom-Ausgangsschaltung einen Gleichstrom mit einer Stromstärke zwischen 4 mA und 20 mA.

Bei einer weiteren bevorzugten Ausgestaltung sind die eine Ausgangsleitung und die Gegen-Elektrode jeweils galvanisch mit der Schirm-Elektrode verbunden.

Bei einer weiteren bevorzugten Ausgestaltung sind die eine Ausgangsleitung mit der Schirm-Elektrode galvanisch und die Gegen-Elektrode mit der Schirm-Elektrode kapazitiv über einen derart bemessenen Kondensator verbunden, daß dessen Kapazität für in Störsignalen auftretende Frequenzen einen möglichst guten Kurzschluß darstellt.

Bei einer weiteren bevorzugten Ausgestaltung sind die Gegen-Elektrode mit der Schirm-Elektrode galvanisch und die eine Ausgangsleitung mit der Schirm-Elektrode kapazitiv über einen derart bemessenen Kondensator verbunden, daß dessen Kapazität für in Störsignalen auftretende Frequenzen einen möglichst guten Kurzschluß darstellt.

Schließlich sind bei einer weiteren Ausgestaltung die eine Ausgangsleitung und die Gegen-Elektrode mit der Schirm-Elektrode über jeweils einen derart bemessenen Kondensator verbunden, daß dessen jeweilige Kapazität für in Störsignalen auftretende Frequenzen einen möglichst guten Kurzschluß darstellt.

Ein erster Vorteil der Erfindung besteht darin, daß Störsignale, die bei Betrieb der Druckmeßanordnung über zwei jeweils mit einer Ausgangsleitung verbundene äußere Anschlußleitungen eines Kabels eingekoppelt werden, also leitungs-gebundene Störungen, durch die niederohmige Kopplung, insb. galvanische oder kapazitive Verbindung, der einen Ausgangsleitung mit der Schirm-Elektrode über den von dieser und der Wand des Gehäuses gebildeten, die Vergußmasse als Dielektrikum aufweisenden Kondensator zum Gehäuse abgeleitet werden, ohne daß zu den Störsignalen gehörende Störfelder in das Innere des Gehäuses vom Boden her eindringen können.

Ein zweiter Vorteil der Erfindung besteht darin, daß Störsignale, die von der Gegen-Elektrode eingefangen werden, durch die niederohmige Kopplung, insb. galvanische oder kapazitive Verbindung, zwischen der Gegen-Elektrode auf der Membran des Drucksensors und der Schirm-Elektrode ebenfalls zur Wand des Gehäuses abgeleitet werden und somit auch von der Öffnung des Gehäuses her keine Störfelder in sein Inneres eindringen können.

Ein weiterer Vorteil der Erfindung ist darin zu sehen, daß durch die Vergußmasse in Explosionsschutz-Standards vorgeschriebene Mindestlängen von Kriechstrecken zwischen Teilen, die im Betriebszustand auf unterschiedlichen Potentialen liegen, eingehalten werden können. Dies trifft insbesondere für diejenigen Stellen zu, wo zwischen der Gegen-Elektrode der Membran und dem Gehäuse nur ein geringer Abstand besteht.

Die Erfindung wird nun anhand der Zeichnung näher erläutert, in deren einziger Figur schematisch im Schnitt ein Ausführungsbeispiel gezeigt ist.

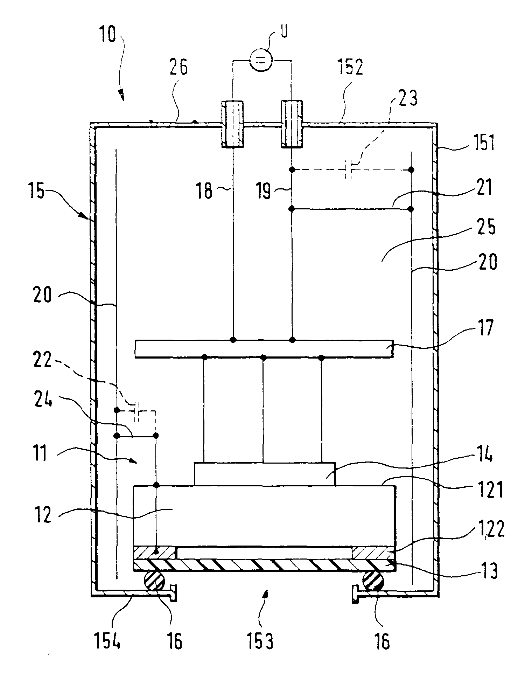

In Fig. 1 ist eine Druckmeßanordnung 10 gezeigt, die einen kapazitiven keramischen Drucksensor 11 als mechanischelektrischen Wandler zur Umwandlung von Druckänderungen in elektrische Signaländerungen enthält.

Der Drucksensor 11 hat einen Grundkörper 12 mit z.B. einer ersten und einer zweiten Elektrode, die auf einer seiner Hauptseiten aufgebracht sind. Der Drucksensor 11 hat ferner eine Membran 13 mit einer darauf aufgebrachten Gegen-Elektrode. Am jeweiligen Rand sind Grundkörper und Membran unter Zwischenlage eines einen gegenseitigen Abstand bedingenden Formteils, z.B. aus einem Aktivhartlot, fest und druckdicht zusammengefügt, so daß eine Kammer im Drucksensor entsteht.

Elektroden und Gegen-Elektrode liegen somit im Inneren des Drucksensors einander gegenüber und bilden daher jeweils einen Kondensator. Diese beiden Kondensatoren haben somit die Gegen-Elektrode als gemeinsame Elektrode. Wenn die Membran 13 Druckänderungen ausgesetzt wird, bewegt sie sich hin und her und verändert somit die jeweilige Kapazität der Kondensatoren. Elektroden und Gegen-Elektrode sind zu einer Rückseite 121 des Grundkörpers 12 geführt und können dort elektrisch kontaktiert werden.

Auf dieser Rückseite ist ein Wandlerschaltung 14 für die druckänderungs-bedingten Kapazitätsänderungen angeordnet, der z.B. in form einer sogenannten Hybridschaltung aufgebaut sein kann, d.h. es sind monolithisch integierte Teile und diskrete Komponenten auf einem gemeinsamen Substrat baulich und elektrisch vereinigt. Für die Wandlerschaltung 14 können Anordnungen verwendet werden, wie sie z.B. in den US-A 52 10 501, 52 57 210 oder 54 51 940 beschrieben sind.

Die Druckmeßanordnung 10 enthält ferner ein topfförmiges metallisches Gehäuse 15 mit einer Wand 151, einem Boden 152 und einer diesem gegenüberliegenden Öffnung 153, in die der Drucksensor 11 druckdicht, z.B. mittels einer ringförmigen Dichtung 16, eingesetzt ist. Diese stützt sich auf einem eingezogenen Rand 154 des Gehäuses 15 von dessen Innerem her ab.

Innerhalb des Gehäuses 15 ist ferner eine Strom-Ausgangsschaltung 17 angeordnet, die eine Ausgangsspannung der Wandlerschaltung 14 in einen Gleichstrom umwandelt, der proportional zu den Kapazitätsänderungen des Drucksensors 11 ist. Dieser Gleichstrom fließt in zwei isoliert durch den Boden 152 des Gehäuses 15 führenden Ausgangsleitungen 18, 19, wenn im Betrieb der Druckmeßanordnung an die Ausgangsleitungen eine äußere Spannungsquelle über Versorgungsleitungen angeschlossen ist. Die Stromstärke des Gleichstroms liegt bevorzugt zwischen 4 mA und 20 mA.

Innerhalb des Gehäuses 15 ist isoliert zur Wand 151 eine Schirm-Elektrode 20, praktisch entlang der gesamten Fläche der Wand 151, angeordnet. Die Schirm-Elektrode 20 kann bevorzugt aus einer mit einem geeigneten Metall, z.B. Kupfer, beschichteten Kunststoff-Folie bestehen.

Eine der beiden Ausgangsleitungen, in der Figur ist das die Ausgangsleitung 19, ist galvanisch oder kapazitiv mit der Schirm-Elektrode 20 verbunden, vgl. die Verbindungsleitung 21 bzw. den Kondensator 23. Ferner ist die Gegen-Elektrode der Membran 13 galvanisch oder kapazitiv, vgl. die Verbindungsleitung 24 bzw. den Kondensator 22, mit der Schirm-Elektrode 20 verbunden. Der jeweilige Kondensator 22, 23 wird bevorzugt derart bemessen, daß seine jeweilige Kapazität für in Störsignalen auftretende Frequenzen einen möglichst guten Kurzschluß darstellt.

Da einerseits die beiden Ausgangsleitungen 18, 19 im allgemeinen in einem gemeinsamen Kabel geführt sind und somit Störsignale auf den beiden Ausgangsleitungen praktisch nur im Gleichtakt auftreten und da andererseits die Ausgangsleitungen im Betriebszustand des Drucksensors mit an einer die Strom-Ausgangsschaltung 17 speisenden Spannungsquelle U angeschlossen sind, über deren (kleinen) Innenwiderstand die Ausgangsleitungen ja auch miteinander verbunden sind, ist es möglich, die geschilderte Wirkung des Nicht-Eindringenlassens von Störfeldern in das Innere des Gehäuses 15 vom Boden 152 her allein mittels der niederohmigen Kopplung einer einzigen Ausgangsleitung mit der Schirm-Elektrode 20 zu erzielen.

Schließlich ist das Innere des Gehäuses 15 mit einer Vergußmasse 25 vollständig gefüllt, die durch eine z.B. im Boden 152 des Gehäuses 15 vorgesehene Einfüll-Öffnung 26 eingebracht wird. Nach dem Einfüllen ist diese durch die Vergußmasse 25 selbst verschlossen, oder sie kann mittels eines eigens vorzusehenden Verschlusses geschlossen werden.

Durch den geschilderten Aufbau werden die oben bereits erwähnten Vorteile erzielt. Insbesondere wird durch das Verfüllen mit der Vergußmasse 25, die auch in den Zwischenraum zwischen der Wand 151 und der Schirm-Elektrode 20 gelangt, ein Kondensator gebildet, dessen Kapazität um den Wert der relativen Dielektrizitätskonstante der Vergußmasse 25 im Vergleich zu einem Aufbau vergrößert ist, bei dem diese fehlt und somit in dem genannten Zwischenraum nur Luft vorhanden wäre.

Ferner bewirkt die Vergußmasse 25, daß in Explosionsschutz-Standards vorgeschriebene Mindestlängen von Kriechstrecken zwischen Teilen, die auf unterschiedlichen Potentialen liegen können, eingehalten werden. Dies trifft insbesondere für diejenigen Stellen zu, wo zwischen der Gegen-Elektrode der Membran 13 und dem Gehäuse 15 nur ein geringer Abstand besteht, also in der Figur z.B. zwischen dem Formteil 122 und der Schirm-Elektrode 20 links und rechts oberhalb von der Dichtung 16, und zwar für den Fall, daß anstatt der Leitung 24 der Kondensator 22 vorgesehen ist.

Auch bewirkt die Vergußmasse 25, daß die Schirm-Elektrode 20 mechanisch fest fixiert ist, so daß sie sich nicht, auch nicht geringfügig, verschieben kann, wenn auf das Gehäuse 15 irgendwelche Bewegungen, insb. mechanische Schwingungen, einwirken, die zu einer mikrophonie-bedingten Einkopplung von Störsignalen auf die Ausgangsleitung 19 führen würden.

Zudem schützt die Vergußmasse 25 gegen eindringende, insb. kriechende, Feuchte und erhöht auch noch die Schmutz-Unempfindlichkeit des Drucksensors.

## Patentansprüche

1. Druckmeßanordnung (10), die umfaßt:
- einen kapazitiven, einen Grundkörper (12) mit mindestens einer darauf aufgebrachten Elektrode und eine zugehörige Membran (13) mit einer darauf aufgebrachten Gegen-Elektrode aufweisenden keramischen Drucksensor (11),
-- welche Elektrode und welche Gegen-Elektrode an einer Rückseite (121) des Grundkörpers elektrisch kontaktierbar sind,
--- auf der eine Wandlerschaltung (14) für druckänderungs-bedingte Kapazitätsänderungen zwischen Elektrode und Gegen-Elektrode angeordnet ist,
- ein topfförmiges metallisches Gehäuse (15) mit einer Wand (151), einem Boden (152) und einer diesem gegenüberliegenden Öffnung (153),
-- in die der Drucksensor (11) druckdicht eingesetzt ist,
- eine innerhalb des Gehäuses (15) angeordnete Strom-Ausgangsschaltung (17) ,
-- die ein Ausgangssignal der Wandlerschaltung (14) in einen kapazitätsänderungs-proportionalen, in zwei isoliert durch den Boden (152) des Gehäuses führenden Ausgangsleitungen (18, 19) fließenden Gleichstrom umwandelt,
- eine innerhalb des Gehäuses (15) isoliert zur Wand (151) angeordnete Schirm-Elektrode (20), die
-- mit einer der beiden Ausgangsleitungen und
-- mit der Gegen-Elektrode niederohmig gekoppelt ist, und
- eine Vergußmasse (25), mit der das Innere des Gehäuses (15) vollständig gefüllt ist.

2. Druckmeßanordnung nach Anspruch 1 mit einer metall-beschichteten Kunststoff-Folie als Schirm-Elektrode (20).

3. Druckmeßanordnung nach Anspruch 1 mit einer Strom-Ausgangsschaltung (17) für 4 mA bis 20 mA.

4. Druckmeßanordnung nach Anspruch 1 mit jeweils einer galvanischen Verbindung der einen Ausgangsleitung (18, 19) und der Gegen-Elektrode mit der Schirm-Elektrode (20).

5. Druckmeßanordnung nach Anspruch 1 mit einer galvanischen Verbindung der einen Ausgangsleitung (18, 19) mit der Schirm-Elektrode (20) und mit einer kapazitiven Verbindung der Gegen-Elektrode mit der Schirm-Elektrode (20) über einen derart bemessenen Kondensator (22), daß dessen Kapazität für in Störsignalen auftretende Frequenzen einen möglichst guten Kurzschluß darstellt.

6. Druckmeßanordnung nach Anspruch 1 mit einer galvanischen Verbindung der Gegen-Elektrode mit der Schirm-Elektrode (20) und mit einer kapazitiven Verbindung der einen Ausgangsleitung (18, 19) mit der Schirm-Elektrode (20) über einen derart bemessenen Kondensator (23), daß dessen Kapazität für in Störsignalen auftretende Frequenzen einen möglichst guten Kurzschluß darstellt.

7. Druckmeßanordnung nach Anspruch 1 mit jeweils einer kapazitiven Verbindung der einen Ausgangsleitung (18, 19) und der Gegen-Elektrode mit der Schirm-Elektrode (20) über jeweils einen derart bemessenen Kondensator (23, 24), daß dessen jeweilige Kapazität für in Störsignalen auftretende Frequenzen einen möglichst guten Kurzschluß darstellt.

## Claims

1. A pressure measuring arrangement (10), comprising:
- a capacitive, ceramic pressure sensor (11), which has a substrate (12) having at least one electrode applied thereto and an associated diaphragm (13) having a counter-electrode applied thereto,
-- it being possible to make electrical contact with said electrode and said counter-electrode at a rear side (121) of the substrate,
--- on which rear side is arranged a converter circuit (14) for capacitance changes between the electrode and counter-electrode which are caused by pressure changes,
- a pot-shaped metallic housing (15) having a wall (151), a bottom (152) and an opening (153) situated opposite to the latter,
-- into which opening the pressure sensor (15) is inserted in a pressure-tight manner,
- a current output circuit (17) arranged inside the housing (15),
-- which current output circuit converts an output signal of the converter circuit (14) into a direct current which is proportional to the capacitance change and flows in two output lines (18, 19) which pass in an insulated manner through the bottom (152) of the housing,
- a shielding electrode (20) which
-- is arranged inside the housing (15) in an insulated manner with respect to the wall (151) and
-- is coupled at low impedance to one of the two output lines and
-- to the counter-electrode, and
- a potting compound (25), with which the interior of the housing (15) is completely filled.

2. The pressure measuring arrangement as claimed in claim 1, having a metal-coated plastic film as shielding electrode (20).

3. The pressure measuring arrangement as claimed in claim 1, having a current output circuit (17) for 4 mA to 20 mA.

4. The pressure measuring arrangement as claimed in claim 1, having a respective electrically conductive connection between the one output line (18, 19) and the shielding electrode (20) and between the counter-electrode the shielding electrode (20).

5. The pressure measuring arrangement as claimed in claim 1, having an electrically conductive connection between the one output line (18, 19) and the shielding electrode (20) and having a capacitive connection between the counter-electrode and the shielding electrode (20) via a capacitor (22) which is dimensioned in such a way that its capacitance represents the best possible short circuit for frequencies occurring in interference signals.

6. The pressure measuring arrangement as claimed in claim 1, having an electrically conductive connection between the counter-electrode and the shielding electrode (20) and having a capacitive connection between the one output line (18, 19) and the shielding electrode (20) via a capacitor (23) which is dimensioned in such a way that its capacitance represents the best possible short circuit for frequencies occurring in interference signals.

7. The pressure measuring arrangement as claimed in claim 1, having a respective capacitive connection between the one output line (18, 19) and the shielding electrode (20) and between the counter-electrode and the shielding electrode (20) via a respective capacitor (23, 24) which is dimensioned in such a way that its respective capacitance represents the best possible short circuit for frequencies occurring in interference signals.

## Revendications

1. Dispositif de mesure de pression (10) qui comporte :
- un capteur de pression céramique (11) capacitif, présentant un corps de base (12) comportant au moins une électrode placée sur ledit corps de base et une membrane associée (13) avec une contre-électrode placée sur ladite membrane,
-- l'électrode et la contre-électrode pouvant être contactées électriquement sur la face arrière (121) du corps de base,
--- sur laquelle un circuit convertisseur (14) est disposé entre l'électrode et la contre-électrode pour les variations de capacité entraînées par les variations de pression,
- un boîtier métallique en forme de pot (15) comportant une paroi (151), un fond (152) et une ouverture (153) opposée audit fond,
-- dans laquelle le capteur de pression (11) est logé de façon étanche à la pression,
- un circuit de sortie de courant (17) disposé à l'intérieur du boîtier (15),
-- qui convertit un signal de sortie du circuit convertisseur (14) en un courant continu proportionnel à la variation de capacité, circulant dans deux lignes de sortie (18, 19) isolées, traversant le fond (152) du boîtier,
- une grille de protection (20), disposée à l'intérieur du boîtier (15), isolée par rapport à la paroi (151), qui
-- est reliée à l'une des deux lignes de sortie et
-- est reliée à basse impédance à la contre-électrode,
et
- une masse de remplissage (25) avec laquelle l'intérieur du boîtier (15) est rempli entièrement.

2. Dispositif de mesure de pression selon la revendication 1, comportant une feuille en matière plastique revêtue de métal en tant que grille de protection (20).

3. Dispositif de mesure de pression selon la revendication 1, comportant un circuit de sortie de courant (17) pour 4 mA à 20 mA.

4. Dispositif de mesure de pression selon la revendication 1, comportant une connexion galvanique respectivement de l'une des lignes de sortie (18, 19) et de la contre-électrode avec la grille de protection (20).

5. Dispositif de mesure de pression selon la revendication 1, comportant une connexion galvanique de l'une des lignes de sortie (18, 19) avec la grille de protection (20) et une connexion capacitive de la contre-électrode avec la grille de protection (20) par l'intermédiaire d'un condensateur (22), dimensionné de telle sorte que la capacité dudit condensateur établisse un court-circuit aussi bon que possible pour les fréquences apparaissant dans les signaux parasites.

6. Dispositif de mesure de pression selon la revendication 1, comportant une connexion galvanique de la contre-électrode avec la grille de protection (20) et une connexion capacitive de l'une des lignes de sortie (18, 19) avec la grille de protection (20) par l'intermédiaire d'un condensateur (23) dimensionné de telle sorte que la capacité dudit condensateur établisse un court-circuit aussi bon que possible pour les fréquences apparaissant dans les signaux parasites.

7. Dispositif de mesure de pression selon la revendication 1, comportant respectivement une connexion capacitive de l'une des lignes de sortie (18, 19) et de la contre-électrode avec la grille de protection (20) par l'intermédiaire respectivement d'un condensateur (23, 24) dimensionné de telle sorte que la capacité desdits condensateurs respectifs établisse un court-circuit aussi bon que possible pour les fréquences apparaissant dans les signaux parasites.
